# EUROPÄISCHE PATENTANMELDUNG

(11) **EP 2 466 715 A2**
(43) Veröffentlichungstag der Anmeldung: **20.06.2012**
(21) Anmeldenummer: 11190936.2
(22) Anmeldetag: 28.11.2011
(51) Int. Cl.: H02J 3/38, H02J 9/06

(54) **USV-Schaltungseinheit und Verfahren zur unterbrechungsfreien Stromversorgung von Verbrauchern einer Stromerzeugungsanlage**

(30) Priorität: 20.12.2010 EP 10015825
(71) Anmelder: FeCon GmbH, 24941 Flensburg (DE)
(72) Erfinder: Feddersen, Lorenz, 24941 Flensburg (DE)
(74) Vertreter: Müller Verweyen

(57) **Zusammenfassung**

Eine USV-Schaltungseinheit (45) zur unterbrechungsfreien Stromversorgung von Verbrauchern (39, 43) einer Stromerzeugungsanlage (5) zum Einspeisen von Strom in ein Stromnetz, umfassend ein Induktivitätselement (49), insbesondere einen Transformator und/oder eine Drossel, und eine mit dem Induktivitätselement verbundene erste USV-Steuerschaltung (51a), die einen mit einer Gleichstromquelle (26) verbundenen Gleichstrompfad (54a) aufweist, wobei die erste USV-Steuerschaltung (51a) eingerichtet ist, um im Falle eines Spannungseinbruchs in dem Stromnetz eine unterbrechungsfreie Stromversorgung der Verbraucher (39, 43) aus der Gleichstromquelle (26) über den Gleichstrompfad sicherzustellen, wobei die USV-Schaltungseinheit mindestens eine zu der ersten USV-Steuerschaltung (51a) parallel geschaltete, mit dem Induktivitätselement (49) verbundene, unabhängige weitere USV-Steuerschaltung (51b) aufweist.

## Beschreibung

Die Erfindung betrifft eine USV-Schaltungseinheit und ein Verfahren zur unterbrechungsfreien Stromversorgung von Verbrauchern einer Stromerzeugungsanlage.

Stromerzeugungsanlagen wie etwa Windkraft-, Wasserkraft-, Photovoltaik- oder Brennstoffzellenanlagen speisen üblicherweise den erzeugten Strom über eine Wechsel- oder Frequenzumrichterschaltung in ein äußeres Stromnetz ein. Ein Frequenzumrichter für eine Windenergieanlage ist beispielsweise aus der WO 03 065 567 A1 bekannt. Derartige Stromerzeugungsanlagen weisen Stromverbraucher auf, die im Normalbetrieb ihren Strom über die Wechsel- oder Frequenzumrichter beziehen. Beispielsweise umfasst die Blattverstellung einer Windenergieanlage Elektromotoren mit einer Leistungsaufnahme von beispielsweise 20 kW bis 30 kW. Darüber hinaus verbrauchen Rechner, Lüfter, Kommunikationseinrichtungen, Sensorelemente, Hydraulikpumpen, Aggregate und andere technische Geräte Strom. Da diese häufig essentiell für den Betrieb und die Sicherheit der Stromerzeugungsanlage sind, muss ein Ausfall dieser stromverbrauchenden Komponenten möglichst vermieden werden.

Zu diesem Zweck ist eine unterbrechungsfreie Stromversorgung einer Windenergieanlage aus der EP 1 965 487 A1 bekannt. Bei Einbruch der Versorgungsspannung für Verbraucher der Windenergieanlage kann eine verbleibende Restspannung in der Schaltung von mindestens 15 % der nominellen Spannung genutzt werden, um die Verbraucher mit Strom zu versorgen. Nachteilig daran ist allerdings, dass die unterbrechungsfreie Stromversorgung überdimensioniert und damit kostenaufwändig ausgestaltet werden muss, damit eine ausreichende Leistung aus der Restspannung gewonnen werden kann.

EP 1 796 254 A2 offenbart ein Stromrichtersystem insbesondere zur Einspeisung von Strom aus einer Windturbine in ein Stromnetz über einen Transformator. Das Stromrichtersystem verwendet eine Mehrzahl von parallel geschalteten Stromrichterbrücken, die zeitgleich mit versetztem Taktmuster (interleaved) angesteuert werden. Jede Stromrichterbrücke umfasst eine eingangsseitige Drosselschaltung, einen Gleichrichter, einen Zwischenkreis, einen Wechselrichter und eine ausgangsseitige Drosselschaltung. Die zusätzlichen Drosselschaltungen, die für den versetzten Betrieb der Stromrichter erforderlich sind, führen zu einer erheblichen Kostensteigerung des Stromrichtersystems.

EP 1 763 126 A1 offenbart ein Verfahren zur Notstromversorgung einer Blattverstelleinheit einer Windenergieanlage, wobei im Falle einer Störung der Stromversorgung die Blattverstelleinheit mit Strom aus einem Batteriepack versorgt wird.

DE 10 2006 024 594 A1 offenbart eine Vorrichtung zur Wechselspannungsversorgung eines Schiffes aus einem Versorgungsnetz am Hafen. In einer Ausführungsform werden mehrere Gleichspannungszwischenkreise durch Parallelschaltung der Gleichrichter und der Wechselrichter zusammengeschaltet, wenn ein Gleichspannungszwischenkreis nicht zur Deckung des Energiebedarfs des Schiffes ausreicht.

WO 2010 038152 A1 offenbart eine Notstromversorgungsvorrichtung.

Es ist die Aufgabe der vorliegenden Erfindung, eine USV-Schaltungseinheit und ein Verfahren zur unterbrechungsfreien Stromversorgung für eine Stromerzeugungsanlage bereitzustellen, die möglichst ausfallsicher und kostengünstig ist.

Die Erfindung löst diese Aufgabe mit den Merkmalen der unabhängigen Ansprüche. Durch die Verwendung zweier parallel zueinander geschalteter USV-Steuerschaltungen wird eine Ausfallredundanz erzielt. Da die USV-Steuerschaltung erheblich empfindlicher ist als das Induktivitätselement, reicht es aus, die USV-Steuerschaltung redundant auszuführen, während ein gemeinsames Induktivitätselement, insbesondere ein gemeinsamer Transformator mit integrierter Drossel, oder eine gemeinsame Drossel, in der USV-Schaltungseinheit verwendet werden kann, ohne das Ausfallrisiko signifikant zu erhöhen. Durch die Verwendung eines gemeinsamen Induktivitätselements für sämtliche USV-Steuerschaltungen in der USV-Schaltungseinheit können die Kosten signifikant gesenkt werden, da das Induktivitätselement ein besonders kostenträchtiges Bauteil ist. Auf zusätzliche Induktivitätselemente, insbesondere Transformatoren und/oder Drosseln, in jeder USV-Steuerschaltung auf der Ausgangsseite und/oder auf der Eingangsseite kann erfindungsgemäß verzichtet werden. Des Weiteren ist eine im Stand der Technik vorgesehene Bypass-Leitung und ein Schalter, mit dem im Falle eines Defekts der USV-Steuerschaltung auf die Bypass-Leitung umgeschaltet wird, erfindungsgemäß entbehrlich.

Vorzugsweise ist die Gleichstromquelle von mindestens einem von der Stromerzeugungsanlage gespeisten Gleichspannungskreis gebildet. Die Nutzung der Energie aus dem Gleichspannungskreis kann die Verwendung eines Akkumulators entbehrlich machen. Eine Akkumulatoreinheit kann aber alternativ oder zusätzlich zu einem von der Stromerzeugungsanlage gespeisten Gleichspannungskreis als Gleichstromquelle(n) vorgesehen sein.

Vorzugsweise erfolgt auch im Normalbetrieb die Stromversorgung der Verbraucher aus einer Gleichstromquelle über einen der Gleichstrompfade. Dadurch ist die Stromversorgung der Verbraucher im Normalbetrieb mit einfachen Mitteln sichergestellt. Eine Versorgung aus dem Stromnetz, die eine weitere Gleichrichtung erforderlich macht, ist dann nur erforderlich, wenn die Stromerzeugungsanlage ruht.

Die Erfindung wird im Folgenden anhand vorteilhafter Ausführungsformen unter Bezugnahme auf die beigefügten Figuren erläutert. Dabei zeigt:
- Fig. 1: eine schematische Darstellung einer Schaltungsanordnung in einer ersten Ausführungsform;
- Fig. 2: eine schematische Darstellung einer Schaltungsanordnung in einer zweiten Ausführungsform; und
- Fig. 3: eine schematische Darstellung einer Schaltungsanordnung in einer dritten Ausführungsform.

Die Schaltungsanordnung 1 umfasst einen Frequenzumrichter 3, der den Strom einer Windenergieanlage 5 über einen Wechselspannungstransformator 7 in ein Stromnetz einspeist. Der Frequenzumrichter 3 umfasst einen Gleichrichter 9, einen Gleichspannungszwischenkreis 11 und einen Wechselrichter 13. Zwischen dem Frequenzumrichter 3 und dem Mittelspannungstransformator 7 sind Filter 15 geschaltet. Eine elektronische Steuereinrichtung 17 wie etwa ein digitaler Signalprozessor DSP steuert die Stromeinspeisung von der Windenergieanlage 5 über den Frequenzumrichter 3 zum Mittelspannungstransformator 7. Beispielsweise im Falle einer Photovoltaikanlage als Stromerzeugungsanlage 5, die bereits Gleichstrom erzeugt, wäre ein Gleichrichter 9 nicht notwendig, wobei dann der Gleichspannungszwischenkreis 11 und der Wechselrichter 13 eine Wechselrichterschaltung bilden würden.

Die drei Phasen 18a, 18b, 18c des Wechselstroms, der beispielsweise von einem Generator 19 der Windenergieanlage 5 erzeugt wird, der von einem Rotor 21 über ein Getriebe 23 aus Windkraft angetrieben wird, werden in dem Gleichrichter 9 gleichgerichtet. Der dem Gleichrichter 9 nachgeschaltete Gleichspannungszwischenkreis 11 weist einen Zwischenkreiskondensator 25 auf, der die Eingangsseite des Wechselrichters 13 speist. Für jede Phase 18a, 18b, 18c umfasst der Wechselrichter 13 jeweils eine Kaskade 27a, 27b, 27c mit jeweils zwei Leistungsschaltern 29, insbesondere Leistungstransistoren, beispielsweise IGBTs.

Die Leistungsschalter 29 werden mittels der elektronischen Steuereinrichtung 17 insbesondere mittels Pulsweitenmodulationssteuerung gesteuert. Die Netzspannungen werden auf der Wechselspannungsseite des Wechselrichters 13, vorzugsweise zwischen dem Filter 15 und dem Mittelspannungstransformator 7, abgenommen und über entsprechende Leitungen 31 der Steuereinrichtung 17 als Spannungsmesssignale zugeführt. Die Ströme auf den einzelnen Phasen 18a, 18b, 18c werden auf der Ausgangsseite des Wechselrichters 13, vorzugsweise zwischen dem Wechselrichter 13 und dem Filter 15, mittels entsprechender Strommesseinrichtungen 33 gemessen und über entsprechende Leitungen 35 der Steuereinrichtung 17 als Strommesssignale zugeführt. Die Steuereinrichtung 17 berechnet aus den gemessenen Spannungen und Strömen die Sollströme. Mithilfe der Sollströme und der gemessenen Ströme ermittelt die Steuereinrichtung 17 die Steuersignale für die Leistungsschalter 29 und steuert diese entsprechend.

Der umgerichtete Drehstrom wird auf der Ausgangsseite des Wechselrichters 13 mittels des Filters 15 geglättet und kann dann mittels des Wechselspannungstransformators 7 auf eine gewünschte Spannung transformiert werden. Der Filter 15 kann dabei als Drossel oder als Transformator ausgeführt sein. Der Wechselspannungstransformator 7 kann je nach Anwendung geeignet gewählt werden. Zur Einspeisung von Strom in ein Mittelspannungsnetz ist der Transformator 7 beispielsweise als DY-Mittelspannungstransformator ausgeführt.

Die Windenergieanlage 5 weist eine Steuereinrichtung 39 zur Blattverstellung für die Blätter des Rotors 21 auf. Der Leistungsbedarf der Steuereinrichtung 39 zur Blattverstellung kann sich dabei kurzzeitig auf beispielsweise 20 bis 30 kW belaufen. Die Windenergieanlage 5 weist weitere Verbraucher auf, beispielsweise eine Getriebesteuerung 43, Sensorik, Rechner, Pumpen etc.

Die Verbraucher 39, 43 werden mittels einer USV-Schaltungseinheit 45 zur unterbrechungsfreien Stromversorgung versorgt. Die USV-Schaltungseinheit 45 weist einen Transformator 49 vorzugsweise mit integrierter Drossel und zwei zueinander parallel geschaltete USV-Steuerschaltungen 51a, 51b auf. Zusätzlich zu dem Transformator 49, anstelle des Transformators 49, oder anstelle der in dem Transformator 49 integrierten Drossel kann eine Drossel als separates Bauteil vorgesehen sein.

Die USV-Steuerschaltungen 51a, 51b sind vorzugsweise als Double-Conversion/Doppelwandler-USV bzw. Online-USV bzw. Dauerbetrieb-USV bzw. VFI (voltage and frequency independent)-USV ausgeführt. Die USV-Steuerschaltungen 51a, 51b weisen vorzugsweise jeweils einen Gleichrichter 53a bzw. 53b und einen Wechselrichter 55a bzw. 55b auf und bilden somit einen Frequenzumrichter. In einer anderen Ausführungsform, die weiter unten noch erläutert wird, sind nur Wechselrichter 55a, 55b vorgesehen und die Gleichrichter 53a, 53b können entfallen.

Die Wechselrichter 55a bzw. 55b sind vorzugsweise analog zu dem Wechselrichter 13 aufgebaut, d.h. für jede Phase umfasst jeder Wechselrichter 55a, 55b jeweils eine Kaskade mit jeweils zwei Leistungsschaltern, insbesondere Leistungstransistoren, beispielsweise IGBTs, die vorzugsweise mittels Pulsweitenmodulation gesteuert werden. Die Gleichrichter 53a bzw. 53b, soweit vorhanden, sind vorzugsweise analog zu dem Gleichrichter 9 aufgebaut. Zusätzliche Induktivitätselemente, insbesondere Transformatoren und/oder Drosseln, sind in den USV-Steuerschaltungen 51a, 51b nicht vorgesehen. Die Wechselrichter 55a, 55b und gegebenenfalls die Gleichrichter 53a, 53b sind jeweils über Steuerverbindungen 57 von der Steuereinrichtung 17 steuerbar. In einer alternativen, nicht gezeigten Ausführungsform können die Stromrichter 55a, 55b bzw. 53a, 53b auch über eine interne Steuereinrichtung in der USV-Schaltungseinheit 45 gesteuert werden.

Der Gleichrichter 53a bzw. 53b ist eingangsseitig mit einem Wechselspannungseingang 58 der USV-Schaltungseinheit 45 und ausgangsseitig mit dem entsprechenden Wechselrichter 55a bzw. 55b verbunden. Der Wechselspannungseingang 58 ist über eine Leitung 47 mit einer oder mehreren Phasen an der Wechselspannungsausgangsseite des Frequenzumrichters 3 bzw. über den Transformator 7 mit dem Stromnetz verbunden. Eine Versorgung der Verbraucher 39, 43 aus dem Stromnetz ist daher über den Wechselspannungseingang 58 und die Leitung 47 möglich. Dies erfolgt vorzugsweise nur dann, wenn in dem Gleichspannungs-Zwischenkreis 11 nicht ausreichend Energie zur Verfügung steht, insbesondere beim Anfahren der Windenergieanlage 5.

Die USV-Schaltungseinheit 45 weist vorzugsweise mindestens einen Gleichspannungseingang 56 auf, der einerseits mit der Gleichspannungsseite der Wechselrichter 55a, 55b und andererseits mit dem Gleichspannungs-Zwischenkreis 11 verbunden ist. Nach diesem besonders vorteilhaften Aspekt wird eine Gleichstromquelle 26 für den Betrieb der Verbraucher 39, 43 von dem Kondensator 25 in dem Gleichspannungs-Zwischenkreis 11 gebildet.

Alternativ oder zusätzlich kann eine Gleichstromquelle in der USV-Schaltungseinheit 45 angeordnet sein, beispielsweise eine Akkumulatoreinheit, was für sich genommen bereits bekannt ist. In diesem Fall ist der Gleichspannungseingang 56 entbehrlich. Grundsätzlich reicht eine Akkumulatoreinheit für die USV-Schaltungseinheit 45 unabhängig von der Zahl der darin angeordneten USV-Steuerschaltungen 51a, 51b aus, d.h. die USV-Steuerschaltungen 51a, 51b nutzen in diesem Fall vorteilhafterweise dieselbe Akkumulatoreinheit.

Im Normalbetrieb beziehen die Verbraucher 39, 43 ihren Strom vorteilhaft aus der Gleichstromquelle 26, insbesondere über den Gleichspannungseingang 56 von dem Gleichspannungs-Zwischenkreis 11 bzw. dem darin angeordneten Kondensator 25. Dies hat den Vorzug, dass die Gleichrichter 53a, 53b im Normalbetrieb inaktiv sind und daher keinem Verschleiß unterliegen. In einer alternativen Ausführungsform können die Verbraucher 39, 43 ihren Strom im Normalbetrieb über den Wechselspannungseingang 58 aus dem Stromnetz beziehen.

Vorzugsweise ist zu jedem Zeitpunkt nur eine der USV-Steuerschaltungen 51a oder 51b aktiv. D.h. die Steuereinrichtung 17 steuert zu jedem Zeitpunkt nur die Stromrichter 55a (gegebenenfalls auch 53a) bzw. 55b (gegebenenfalls auch 53b) einer USV-Steuerschaltung 51a bzw. 51b an, um einen Versorgungsstrom durch die entsprechende USV-Steuerschaltung 51a bzw. 51b zu erzeugen. Der entsprechende Wechselrichter 55a bzw. 55b unterliegt somit ständig dem vollen Betriebsstrom. Die andere USV-Steuerschaltung 51b bzw. 51a ist im Normalbetrieb vorzugsweise nicht aktiv, d.h. es fließt kein Strom über den jeweiligen Wechselrichter 55b bzw. 55a. Dies hat den Vorzug, dass der Stromrichter 55b (gegebenenfalls auch 53b) bzw. 55a (gegebenenfalls auch 53a) der inaktiven USV-Steuerschaltung 51b bzw. 51a keinem Verschleiß unterliegt.

Bei einem Netzfehlerfall bzw. Spannungseinbruch auf einer netzseitigen Phase des Wechselrichters 13 bezieht der Wechselrichter 55a bzw. 55b der aktiven USV-Steuerschaltung 51a bzw. 51b auch weiterhin Gleichstrom aus dem Zwischenkreis 11 über den Gleichspannungseingang 56, um eine unterbrechungsfreie Stromversorgung der Verbraucher 39, 43 sicherzustellen. Eine direkte Abhängigkeit der Versorgung der Verbraucher 39, 43 von dem Stromnetz ist somit nicht gegeben. Da die Energie zum Betrieb der Verbraucher 39, 43 somit letztlich aus dem Generator 19 stammt, kann die Windenergieanlage 5 auch bei einem längeren Ausfall des Stromnetzes in Betrieb bleiben, solange ausreichend Wind vorhanden ist. Die Kapazität und damit die Notbetriebsdauer ist daher nicht wie bei herkömmlichen Akkumulatoreinheiten von vorneherein begrenzt.

Bei einem Ausfall, einem internen Fehler bzw. einer Überlastung einer der USV-Steuerschaltungen 51a, 51b wird die defekte USV-Steuerschaltung 51a, 51b deaktiviert und die andere USV-Steuerschaltung 51b, 51a aktiviert, um die unterbrechungsfreie Stromversorgung der Verbraucher 39, 43 aufrechtzuerhalten. Die Umschaltung von einer defekten USV-Steuerschaltung 51a, 51b auf eine intakte USV-Steuerschaltung 51b, 51a kann entweder durch eine interne Steuerung in den USV-Steuerschaltungen 51a, 51b oder durch die zentrale Steuereinrichtung 17 erfolgen. Um im Falle einer defekten USV-Steuerschaltung 51a, 51b die Stromversorgung der Verbraucher 39, 43 alleine aufrechterhalten zu können, ist jede USV-Steuerschaltung 51a, 51b für sich ausreichend dimensioniert, um eine der maximalen Leistungsaufnahme sämtlicher Verbraucher 39, 43 entsprechende Leistung bereitzustellen.

In einer nicht gezeigten Ausführungsform können die Gleichrichter 53a, 53b entfallen. In diesem Fall nutzt man die Dioden der Kaskaden 27a, 27b, 27c als Gleichrichter zum Anfahren der Windenergieanlage 5. Durch eine geeignete Verschaltung dieser Dioden kann dann der Gleichspannungszwischenkreis 11 bzw. der Gleichstromeingang 56 aus dem Stromnetz versorgt werden.

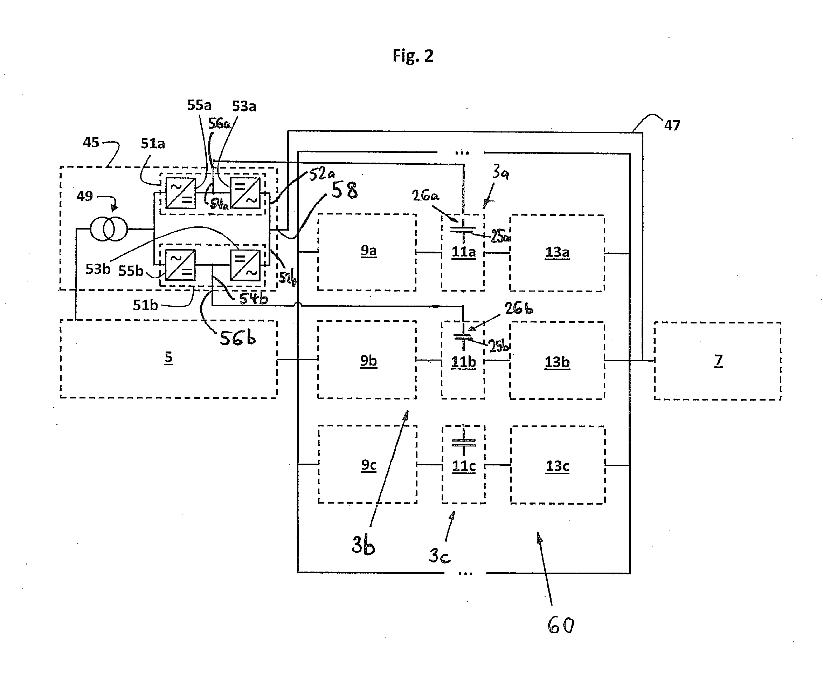

In der Ausführungsform gemäß Fig. 2 sind die Windenergieanlage 5, die Frequenzumrichterschaltung 60 und der Wechselspannungstransformator 7 nur schematisch dargestellt. Die Frequenzumrichterschaltung 60 weist dabei vorteilhafterweise eine Mehrzahl von parallel geschalteten Frequenzumrichtern 3a, 3b, 3c, ... auf. Um die Ausfallsicherheit weiter zu erhöhen, weist die USV-Schaltungseinheit 45 vorzugsweise eine Mehrzahl von Gleichspannungseingängen 56a, 56b auf. Vorzugsweise ist dabei jeder Wechselrichter 55a bzw. 55b über einen zugeordneten Gleichspannungseingang 56a, 56b mit einem verschiedenen Zwischenkreis 11a bzw. 11b verbunden, wie beispielsweise in Fig. 2 gezeigt, um die Unabhängigkeit der USV-Steuerschaltungen 51a, 51b voneinander und damit die Ausfallsicherheit weiter zu erhöhen. In einer nicht gezeigten Ausführungsform kann auch ein Gleichspannungseingang 56 mit einer Mehrzahl von Zwischenkreisen 11a, 11b (11c) verbunden sein.

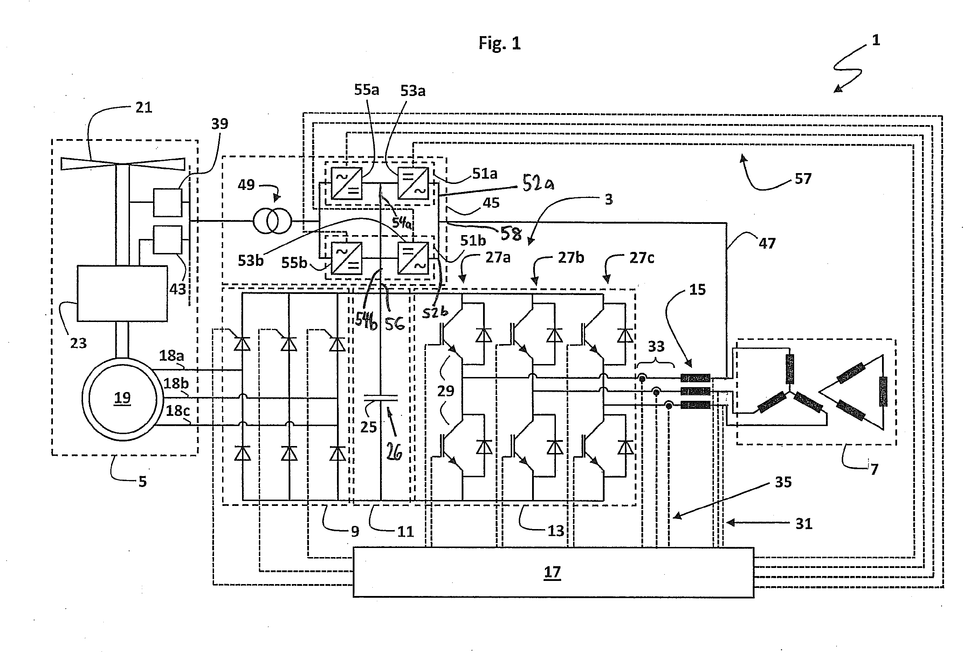

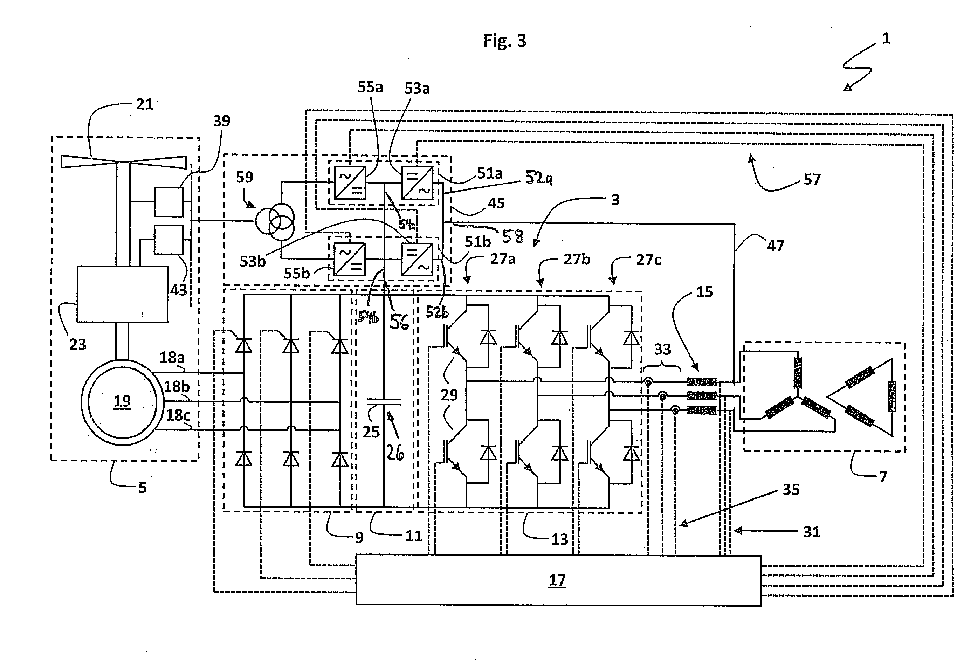

Die in Fig. 3 gezeigte Ausführungsform der Schaltungsanordnung 1 unterscheidet sich von der in Fig. 1 gezeigten Ausführungsform dadurch, dass die USV-Schaltungseinheit 45 zur unterbrechungsfreien Stromversorgung einen 3-Wicklungs-Transformator 59 aufweist, wobei eine erste Wicklung auf der Primärseite des 3-Wicklungs-Tranformators 59 mit einer ersten 51a der zwei USV-Steuerschaltungen 51a, 51b verbunden ist und eine zweite Wicklung auf der Primärseite des 3-Wicklungs-Tranformators 59 mit einer zweiten 51b der zwei USV-Steuerschaltungen 51a, 51b verbunden ist. Analog kann selbstverständlich auch die Ausführungsform gemäß Fig. 2 mit einem 3-Wicklungs-Transformator 59 ausgestattet sein.

In weiteren nicht gezeigten Ausführungsformen kann die USV-Schaltungseinheit 45 mehr als zwei parallel geschaltete USV-Steuerschaltungen 51a, 51b, 51c (...) aufweisen.

## Patentansprüche

1. USV-Schaltungseinheit (45) zur unterbrechungsfreien Stromversorgung von Verbrauchern (39, 43) einer Stromerzeugungsanlage (5) zum Einspeisen von Strom in ein Stromnetz, umfassend ein Induktivitätselement (49), insbesondere einen Transformator und/oder eine Drossel, und eine mit dem Induktivitätselement verbundene erste USV-Steuerschaltung (51a), die einen mit einer Gleichstromquelle (26; 26a) verbundenen Gleichstrompfad (54a) aufweist, wobei die erste USV-Steuerschaltung (51a) eingerichtet ist, um im Falle eines Spannungseinbruchs in dem Stromnetz eine unterbrechungsfreie Stromversorgung der Verbraucher (39, 43) aus der Gleichstromquelle (26; 26a) über den Gleichstrompfad (54a) sicherzustellen, **dadurch gekennzeichnet, dass** die USV-Schaltungseinheit mindestens eine zu der ersten USV-Steuerschaltung (51a) parallel geschaltete, mit dem Induktivitätselement (49) verbundene, unabhängige weitere USV-Steuerschaltung (51b) mit einem weiteren mit einer Gleichstromquelle (26; 26b) verbundenen Gleichstrompfad (54b) aufweist.

2. USV-Schaltungseinheit nach Anspruch 1, wobei die Gleichstromquelle (26; 26a, 26b) von mindestens einem durch die Stromerzeugungsanlage (5) gespeisten Gleichspannungskreis (11; 11a, 11b) gebildet ist.

3. USV-Schaltungseinheit nach einem der vorangehenden Ansprüche, wobei im Normalbetrieb die Stromversorgung der Verbraucher (39, 43) aus einer Gleichstromquelle (26; 26a, 26b) über einen der Gleichstrompfade (54a, 54b) erfolgt.

4. USV-Schaltungseinheit nach einem der vorangehenden Ansprüche, wobei zu jedem Zeitpunkt nur eine USV-Steuerschaltung (51a; 51b) aktiv ist.

5. USV-Schaltungseinheit nach einem der vorangehenden Ansprüche, wobei bei Feststellung einer Fehlfunktion einer USV-Steuerschaltung (51a; 51b) automatisch auf eine andere USV-Steuerschaltung (51b; 51a) umgeschaltet wird.

6. USV-Schaltungseinheit nach einem der vorangehenden Ansprüche, wobei die USV-Steuerschaltungen (51a, 51b) auf der Ausgangsseite und/oder auf der Eingangsseite frei von den USV-Steuerschaltungen (51a, 51b) individuell zugeordneten Induktivitätselementen, insbesondere Transformatoren und/oder Drosseln, sind.

7. USV-Schaltungseinheit nach einem der vorangehenden Ansprüche, wobei jede USV-Steuerschaltung (51a; 51b) einzeln zur Bereitstellung der maximalen Leistungsaufnahme durch sämtliche Verbraucher (39, 43) dimensioniert ist.

8. USV-Schaltungseinheit nach einem der vorangehenden Ansprüche, wobei die USV-Steuerschaltungen (51a, 51b) jeweils einen Wechselrichter (55a, 55b) aufweisen.

9. USV-Schaltungseinheit nach Anspruch 8, wobei die Gleichstrompfade (54a, 54b) jeweils mit der Gleichspannungsseite der Wechselrichter (55a, 55b) verbunden sind.

10. USV-Schaltungseinheit nach einem der vorangehenden Ansprüche, wobei die USV-Steuerschaltungen (51a, 51b) jeweils einen Gleichrichter (53a, 53b) aufweisen.

11. USV-Schaltungseinheit nach Anspruch 10, wobei die Wechselspannungsseite der Gleichrichter (53a, 53b) mit dem Stromnetz verbunden ist.

12. USV-Schaltungseinheit nach einem der vorangehenden Ansprüche, wobei die Gleichstrompfade (54a, 54b) mit mindestens zwei durch die Stromerzeugungsanlage (5) gespeisten und zueinander parallel geschalteten Zwischenkreisen (11a, 11b) verbunden sind.

13. USV-Schaltungseinheit nach einem der vorangehenden Ansprüche, wobei jeder Gleichstrompfad (54a, 54b) mit einem unterschiedlichen aus einer Mehrzahl von durch die Stromerzeugungsanlage (5) gespeisten und zueinander parallel geschalteten Zwischenkreisen (11a, 11b) verbunden ist.

14. Verfahren zur unterbrechungsfreien Stromversorgung von Verbrauchern (39, 43) einer Stromerzeugungsanlage (5) zum Einspeisen von Strom in ein Stromnetz, unter Verwendung einer USV-Schaltungseinheit (45) insbesondere nach einem der vorangehenden Ansprüche, **dadurch gekennzeichnet, dass** im Falle eines Spannungseinbruchs in dem Stromnetz die USV-Schaltungseinheit (45) zur Versorgung des mindestens einen Verbrauchers (39, 43) mit Strom aus mindestens einem durch die Stromerzeugungsanlage (5) gespeisten Zwischenkreis-Kondensator (25) eingerichtet ist.
